# EUROPEAN PATENT APPLICATION

(11) **EP 4 590 047 A1**
(43) Date of publication of application: **23.07.2025**
(21) Application number: 23870328.4
(22) Date of filing: 13.09.2023
(51) Int. Cl.: H04W 72/12

(54) **METHOD FOR REPORTING BUFFER STATE REPORT, AND COMMUNICATION APPARATUS**

(30) Priority: 29.09.2022 CN 202211198269
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Maiwald GmbH
(86) International application number: PCT/CN2023/118497
(87) International publication number: WO 2024/067091

(57) **Abstract**

This application provides a method for reporting a buffer status report and a communication apparatus. The method includes: A first communication apparatus sends a buffer status report BSR to a second communication apparatus, where the BSR includes a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval. The first communication apparatus receives configuration information from the second communication apparatus, where the configuration information is used for configuring a communication resource used by the first communication apparatus to transmit the service. According to the foregoing technical solutions, in this application, the second communication apparatus can configure a more accurate communication resource for service transmission of the first communication apparatus based on the BSR reported by the first communication apparatus, to avoid a waste or deficiency of allocated communication resources.

## Description

This application claims priority to Chinese Patent Application No. 202211198269.6, filed with the China National Intellectual Property Administration on September 29, 2022 and entitled "METHOD FOR REPORTING BUFFER STATUS REPORT AND COMMUNICATION APPARATUS", which is incorporated herein by reference in its entirety.

### TECHNICAL FIELD

This application relates to the field of communication technologies, and more specifically, to a method for reporting a buffer status report and a communication apparatus.

### BACKGROUND

When a terminal device needs to transmit uplink data, the terminal device sends a buffer status report (buffer status report, BSR) to a network device, to indicate the uplink data that needs to be transmitted by the terminal device and a data amount of the uplink data. The network device configures an appropriate communication resource for transmission of the uplink data of the terminal device based on the BSR.

However, all service transmission of the terminal device is reported by using a same BSR table (where the BSR table includes at least one BSR index and a buffer status value interval that is in one-to-one correspondence with each BSR index). Consequently, the network device may fail to provide more accurate communication resource allocation for a service with a large data amount of the terminal device, causing a waste or deficiency of allocated communication resources.

### SUMMARY

This application provides a method for reporting a buffer status report and a communication apparatus, so that a second communication apparatus can configure a more accurate communication resource for service transmission of a first communication apparatus based on a BSR reported by the first communication apparatus, to avoid a waste or deficiency of allocated communication resources.

According to a first aspect, a method for reporting a buffer status report is provided, and includes: A first communication apparatus sends a BSR to a second communication apparatus, where the BSR includes a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval. The first communication apparatus receives configuration information from the second communication apparatus, where the configuration information is used for configuring a communication resource used by the first communication apparatus to transmit the service.

Specifically, the second communication apparatus determines the BSR index based on the first parameter in the BSR reported by the first communication apparatus, and then determines the buffer status value interval corresponding to an SBR index. Because the second parameter is the associated parameter of the BSR index, the second communication apparatus further determines the data amount of the service of the first communication apparatus based on the associated parameter and with reference to the buffer status value interval. In comparison with an existing BSR structure, in this application, the associated parameter is configured for the first parameter, so that the data amount of the service of the first communication apparatus can be more accurately indicated.

For example, if the data amount of the service of the first communication apparatus exceeds a maximum buffer status value interval that can be indicated by a BSR table, a coefficient used for an addition operation of a buffer status value interval in the BSR table is configured, so that the second communication apparatus can more accurately obtain the data amount of the service of the first communication apparatus based on the first parameter and the second parameter that are reported by the first communication apparatus.

In conclusion, according to the foregoing technical solution, in this application, the second communication apparatus can configure a more accurate communication resource for service transmission of the first communication apparatus based on the BSR reported by the first communication apparatus, to avoid a waste or deficiency of allocated communication resources.

In a possible implementation, the second parameter includes at least one of the following: an interval index, an operation coefficient, or an indication parameter. The interval index indicates a subinterval in the buffer status value interval. The operation coefficient is used for an operation on the buffer status value interval. The indication parameter indicates whether the operation coefficient needs to be used.

In this application, one or more of the foregoing several parameters can more accurately indicate the data amount of the service of the first communication apparatus, and the second communication apparatus may also configure a more accurate communication resource for service transmission of the first communication apparatus based on a combination of the foregoing several parameters and the first parameter, to avoid a waste or deficiency of allocated communication resources.

For example, the second parameter includes the interval index. The interval index indicates a specific subinterval in the buffer status value interval indicated by the first parameter. The second communication apparatus determines the specific subinterval in the buffer status value interval based on the buffer status value interval indicated by the first parameter and the interval index. In this case, the subinterval may be closer to an actual data amount of the service of the first communication apparatus. In comparison with a manner in which only the buffer status value interval is indicated, in this application, the second communication apparatus can configurate a more accurate communication resource for service transmission of the first communication apparatus.

For another example, when the second parameter includes the operation coefficient, the second communication apparatus performs, based on the operation coefficient, an operation, for example, a multiplication operation or an addition operation, on the buffer status value interval indicated by the first parameter, to obtain a more accurate buffer status value interval. The new buffer status value interval obtained by performing the operation may be closer to an actual data amount of the service of the first communication apparatus. In comparison with a manner in which only the buffer status value interval is indicated, in this application, the second communication apparatus can configure a more accurate communication resource for service transmission of the first communication apparatus.

In a possible implementation, the operation coefficient includes at least one of the following: a first coefficient or a second coefficient. The first coefficient is used for an addition operation on the buffer status value interval. The second coefficient is used for a multiplication operation on the buffer status value interval.

Based on the first coefficient or the second coefficient, BSR feedback precision of the data amount of the service of the first communication apparatus can be improved in this application.

In a possible implementation, when the second parameter includes the interval index, before the first communication apparatus sends the BSR to the second communication apparatus, the method further includes: The first communication apparatus determines that the data amount of the service falls within the subinterval.

In a possible implementation, when the service is an extended reality service, the buffer status value interval is a parameter in a long BSR table.

Specifically, a data amount of the extended reality service is generally large. If BSR feedback is performed by using a short BSR table, the second communication apparatus may fail to configure sufficient communication resources for service transmission of the first communication apparatus. Therefore, it is stipulated that, for transmission of the extended reality service, BSR feedback may be performed by using the long BSR table, so that the second communication apparatus can configure sufficient communication resources for service transmission of the first communication apparatus.

In a possible implementation, the method further includes: The first communication apparatus determines whether the data amount of the service is greater than 150 K bits. When the data amount of the service is less than or equal to 150 K bits, the buffer status value interval is a parameter in a short BSR table. When the data amount of the service is greater than 150 K bits, the buffer status value interval is a parameter in a long BSR table.

In this application, the first communication apparatus can determine an appropriate BSR table based on the data amount of the service. For example, when the data amount of the service is small (≤ 150 Kbytes), the short BSR table may be used. When the data amount of the service is large (> 150 Kbytes), the long BSR table may be used. In this way, BSR reporting precision of the data amount of the service can be improved.

According to a second aspect, a method for reporting a buffer status report is provided, and includes: A second communication apparatus receives a BSR from a first communication apparatus, where the BSR includes a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval. The second communication apparatus determines configuration information based on the BSR, where the configuration information is used for configuring a communication resource used by the first communication apparatus to transmit the service. The second communication apparatus sends the configuration information to the first communication apparatus.

In a possible implementation, the second parameter includes at least one of the following: an interval index, an operation coefficient, or an indication parameter. The interval index indicates a subinterval in the buffer status value interval. The operation coefficient is used for an operation on the buffer status value interval. The indication parameter indicates whether the operation coefficient needs to be used.

In a possible implementation, the operation coefficient includes at least one of the following: a first coefficient or a second coefficient. The first coefficient is used for an addition operation on the buffer status value interval. The second coefficient is used for a multiplication operation on the buffer status value interval.

In a possible implementation, when the service is an extended reality service, the buffer status value interval is a parameter in a long BSR table.

In a possible implementation, that the second communication apparatus determines the configuration information based on the BSR includes: The second communication apparatus determines the data amount of the service based on the first parameter and the second parameter. The second communication apparatus determines the configuration information based on the data amount of the service.

In a possible implementation, when the data amount of the service is less than or equal to 150 K bits, the buffer status value interval is a parameter in a short BSR table. When the data amount of the service is greater than 150 K bits, the buffer status value interval is a parameter in a long BSR table.

According to a third aspect, a communication apparatus is provided. The communication apparatus may be used as the first communication apparatus according to the first aspect. The communication apparatus may be a terminal device, an apparatus (for example, a chip, a chip system, or a circuit) in the terminal device, or an apparatus that matches the terminal device for use.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

In a possible implementation, the communication apparatus includes a transceiver unit, configured to send a BSR to a second communication apparatus, where the BSR includes a first parameter and a second parameter, the first parameter indicates a BSR index, the second parameter is an associated parameter of the BSR index, the first parameter and the second parameter indicate a data amount of a service of the communication apparatus, and the BSR index indicates a buffer status value interval. The transceiver unit is further configured to receive configuration information from the second communication apparatus, where the configuration information is used for configuring a communication resource used by the communication apparatus to transmit the service.

In a possible implementation, the second parameter includes at least one of the following: an interval index, an operation coefficient, or an indication parameter. The interval index indicates a subinterval in the buffer status value interval. The operation coefficient is used for an operation on the buffer status value interval. The indication parameter indicates whether the operation coefficient needs to be used.

In a possible implementation, the operation coefficient includes at least one of the following: a first coefficient or a second coefficient. The first coefficient is used for an addition operation on the buffer status value interval. The second coefficient is used for a multiplication operation on the buffer status value interval.

In a possible implementation, the communication apparatus further includes a processing unit. The processing unit is configured to determine that the data amount of the service falls within the subinterval.

In a possible implementation, when the service is an extended reality service, the buffer status value interval is a parameter in a long BSR table.

In a possible implementation, the processing unit is further configured to determine whether the data amount of the service is greater than 150 K bits. When the data amount of the service is less than or equal to 150 K bits, the buffer status value interval is a parameter in a short BSR table. When the data amount of the service is greater than 150 K bits, the buffer status value interval is a parameter in a long BSR table.

According to a fourth aspect, a communication apparatus is provided. The communication apparatus may be used in the second communication apparatus in the second aspect. The communication apparatus may be a network device, an apparatus (for example, a chip, a chip system, or a circuit) in the network device, or an apparatus that matches the network device for use.

In a possible implementation, the communication apparatus may include modules or units in one-to-one correspondence with the method/operations/steps/actions described in the second aspect. The module or unit may be a hardware circuit or software, or may be implemented by a hardware circuit in combination with software.

In a possible implementation, the communication apparatus includes: a transceiver unit, configured to receive a BSR from a first communication apparatus, where the BSR includes a first parameter and a second parameter, the first parameter indicates a BSR index, the second parameter is an associated parameter of the BSR index, the second parameter and the first parameter indicate a data amount of a service of the first communication apparatus, and the BSR index indicates a buffer status value interval; and a processing unit, configured to determine configuration information based on the BSR, where the configuration information is used for configuring a communication resource used by the first communication apparatus to transmit the service. The transceiver unit is further configured to send the configuration information to the first communication apparatus.

In a possible implementation, the second parameter includes at least one of the following: an interval index, an operation coefficient, or an indication parameter. The interval index indicates a subinterval in the buffer status value interval. The operation coefficient is used for an operation on the buffer status value interval. The indication parameter indicates whether the operation coefficient needs to be used.

In a possible implementation, the operation coefficient includes at least one of the following: a first coefficient or a second coefficient. The first coefficient is used for an addition operation on the buffer status value interval. The second coefficient is used for a multiplication operation on the buffer status value interval.

In a possible implementation, when the service is an extended reality service, the buffer status value interval is a parameter in a long BSR table.

In a possible implementation, the processing unit is further configured to determine the data amount of the service based on the first parameter and the second parameter, and determine the configuration information based on the data amount of the service.

In a possible implementation, when the data amount of the service is less than or equal to 150 K bits, the buffer status value interval is a parameter in a short BSR table. When the data amount of the service is greater than 150 K bits, the buffer status value interval is a parameter in a long BSR table.

According to a fifth aspect, a communication apparatus is provided, including a processor. The processor is configured to execute a computer program or instructions, or enable, by using a logic circuit, the communication apparatus to perform the method according to any one of the first aspect or the possible implementations of the first aspect; or enable the communication apparatus to perform the method according to any one of the second aspect or the possible implementations of the second aspect.

In a possible implementation, the apparatus further includes a memory, and the memory is configured to store the computer program or instructions.

Optionally, the processor and the memory are integrated together, or the processor and the memory are disposed separately.

In another possible implementation, the memory is located outside the communication apparatus.

In a possible implementation, the communication apparatus further includes a communication interface, and the communication interface is configured to input and/or output a signal.

For example, the communication interface may be a transceiver, a circuit, a bus, a module, or another type of communication interface.

According to a sixth aspect, a communication apparatus is provided, including a logic circuit and an input/output interface. The input/output interface is configured to output and/or input a signal, and the logic circuit is configured to perform the method according to any one of the first aspect or the possible implementations of the first aspect; or perform the method according to any one of the second aspect or the possible implementations of the second aspect.

In a possible implementation, the input/output interface is configured to output a BSR to a second communication apparatus, where the BSR includes a first parameter and a second parameter, the first parameter indicates a BSR index, the second parameter is an associated parameter of the BSR index, the first parameter and the second parameter indicate a data amount of a service of the communication apparatus, and the BSR index indicates a buffer status value interval. The input/output interface is further configured to input configuration information sent by the second communication apparatus, where the configuration information is used for configuring a communication resource used by the communication apparatus to transmit the service.

In a possible implementation, the input/output interface is configured to input a BSR of a first communication apparatus, where the BSR includes a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval. The logic circuit is configured to determine configuration information based on the BSR, where the configuration information is used for configuring a communication resource used by the first communication apparatus to transmit the service. The input/output interface is further configured to output the configuration information.

According to a seventh aspect, a computer-readable storage medium is provided, including a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect.

According to an eighth aspect, a computer program product is provided, including instructions. When the instructions are run on a computer, the computer is enabled to perform the method according to any one of the first aspect and the possible implementations of the first aspect, or the computer is enabled to perform the method according to any one of the second aspect and the possible implementations of the second aspect.

According to a ninth aspect, an embodiment of this application further provides a first communication apparatus, configured to perform the method according to the first aspect and the possible implementations of the first aspect, or configured to perform the method according to the second aspect and the possible implementations of the second aspect.

According to a tenth aspect, an embodiment of this application further provides a second communication apparatus, configured to perform the method according to the third aspect and the possible implementations of the third aspect, or configured to perform the method according to the fourth aspect and the possible implementations of the fourth aspect.

According to an eleventh aspect, an embodiment of this application further provides a communication system, including the first communication apparatus provided in the third aspect and the foregoing possible implementations and the second communication apparatus provided in the fourth aspect and the foregoing possible implementations.

### BRIEF DESCRIPTION OF DRAWINGS

FIG. 1 is a diagram of a communication system 100 to which an embodiment of this application is applicable;
FIG. 2 is a schematic interaction flowchart of a method 200 for reporting a buffer status report according to an embodiment of this application;
FIG. 3 is a schematic interaction flowchart of a method 300 for reporting a buffer status report according to an embodiment of this application;
FIG. 4 is a diagram of a structure of a buffer status report according to an embodiment of this application;
FIG. 5 is a schematic interaction flowchart of a method 500 for reporting a buffer status report according to an embodiment of this application;
FIG. 6 is a diagram of another structure of a buffer status report according to an embodiment of this application;
FIG. 7 is a schematic interaction flowchart of a method 700 for reporting a buffer status report according to an embodiment of this application;
FIG. 8 is a diagram of still another structure of a buffer status report according to an embodiment of this application;
FIG. 9 is a block diagram of a structure of a communication apparatus 900 according to an embodiment of this application;
FIG. 10 is a block diagram of a structure of a communication apparatus 1000 according to an embodiment of this application;
FIG. 11 is a block diagram of a structure of a communication apparatus 1100 according to an embodiment of this application;
FIG. 12 is a block diagram of a structure of a communication apparatus 1200 according to an embodiment of this application; and
FIG. 13 is a block diagram of a structure of a communication apparatus 1300 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G such as a 6th generation (6th generation, 6G) system, or a non-terrestrial network (non-terrestrial network, NTN) system such as inter-satellite communication and satellite communication. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like such as an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application may also be applied to a scenario in which the terminal is connected to a single base station. A base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application are also applicable to a macro-micro scenario including different forms of base stations in a communication network. For example, the base station may be a satellite, an air balloon station, an uncrewed aerial vehicle station, or the like. The technical solutions in embodiments of this application are also applicable to a scenario in which both a wide-coverage base station and a small-coverage base station exist.

It may be further understood that, the technical solutions in embodiments of this application may be further applied to a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component.

The network device in embodiments of this application is a device having a wireless transceiver function, and is configured to communicate with the terminal device. The access network device may be a node in a radio access network (radio access network, RAN), may be referred to as a base station, or may be referred to as a RAN node. The access network device may be an evolved base station (evolved NodeB, eNB or eNodeB) in LTE, a base station in a 5G network such as a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like.

The network device in embodiments of this application may further include base stations in various forms, for example, a macro base station, a micro base station (also referred to as a small cell), a relay station, a transmission reception point (transmission reception point, TRP), a transmission point (transmission point, TP), a mobile switching center, and a device or the like that undertakes a function of the base station in device-to-device (device-to-device, D2D) communication, vehicle-to-everything (vehicle-to-everything, V2X) communication, and machine-to-machine (machine-to-machine, M2M) communication. The network device may further include a central unit (central unit, CU) and a distributed unit (distributed unit, DU) in a cloud radio access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

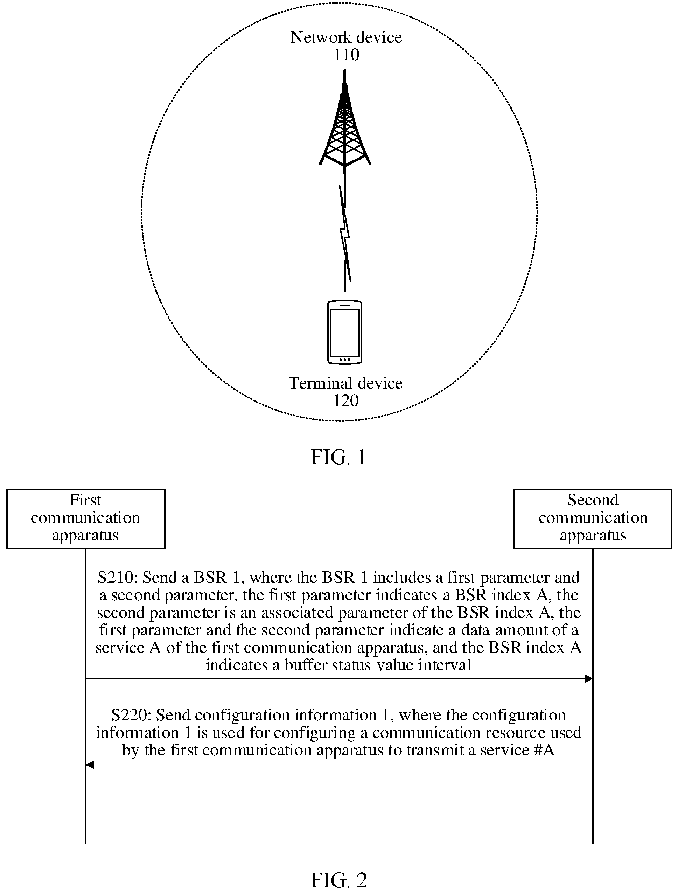

FIG. 1 is a diagram of a communication system 100 to which an embodiment of this application is applicable. As shown in FIG. 1, the communication system 100 includes a network device 110 and a terminal device 120. In addition, quantities of terminal devices 120 and network devices 110 that are included in the communication system 100 are not limited in embodiments of this application. It should be understood that FIG. 1 is merely an example for understanding, and cannot limit the protection scope claimed in this application. The terminal device 120 may be any terminal device listed above, and the network device 110 may also be any network device listed above.

In the communication system shown in FIG. 1, when uplink data needs to be transmitted, the terminal device 120 sends a BSR to the network device 110. The BSR indicates, to the network device 110, that the terminal device 120 has the uplink data that needs to be transmitted and indicates a data amount of the uplink data. The network device 110 configures a communication resource for the terminal device 120 based on the BSR reported by the terminal device 120. The terminal device 120 transmits the uplink data based on the communication resource configured by the network device 110.

Because all service transmission of the terminal device 120 is reported by using a same BSR table, the network device 110 may fail to provide more accurate communication resource allocation for a service with a large data amount of the terminal device 120, causing a problem such as a waste or deficiency of allocated communication resources.

Specifically, BSR tables include a short BSR table and a long BSR table. One BSR table includes a plurality of BSR indexes and a buffer status value interval that is in one-to-one correspondence with each SBR index. The short BSR table can accurately feed back a service with a data amount that falls within 0 to 150 Kbytes (where the short BSR table may alternatively feed back a service with a data amount greater than 150 Kbytes, but cannot accurately feed back the data amount of the service). The long BSR table can accurately feed back a service with a data amount that falls within 0 to 81 Mbytes (where the long BSR table may alternatively feed back a service with a data amount greater than 81 Mbytes, but cannot accurately feed back the data amount of the service). If a data amount of a specific service exceeds 81 Mbytes, the long BSR table may fail to accurately feed back the service.

In the long BSR table, as a BSR index (index) in the BSR table increases, an interval length of a buffer status value (BS value) interval indicated by the BSR index also increases. For details, refer to Table 1.

**Table 1**

| **Index** | **BS value** | **Index** | **BS value** | **Index** | **BS value** | **Index** | **BS value** | **Index** | **BS value** |
|---|---|---|---|---|---|---|---|---|---|
| 0 | 0 | 52 | ≤ 264 | 104 | ≤ 6928 | 156 | ≤ 182345 | 208 | ≤ 4799451 |
| 1 | ≤ 10 | 53 | ≤ 281 | 105 | ≤ 7378 | 157 | ≤ 194182 | 209 | ≤ 5110989 |
| 2 | ≤ 11 | 54 | ≤ 299 | 106 | ≤ 7857 | 158 | ≤ 206786 | 210 | ≤ 5442750 |
| 3 | ≤ 12 | 55 | ≤ 318 | 107 | ≤ 8367 | 159 | ≤ 220209 | 211 | ≤ 5796046 |
| 4 | ≤ 13 | 56 | ≤ 339 | 108 | ≤ 8910 | 160 | ≤ 234503 | 212 | ≤ 6172275 |
| 5 | ≤ 14 | 57 | ≤ 361 | 109 | ≤ 9488 | 161 | ≤ 249725 | 213 | ≤ 6572925 |
| 6 | ≤ 15 | 58 | ≤ 384 | 110 | ≤ 10104 | 162 | ≤ 265935 | 214 | ≤ 6999582 |
| 7 | ≤ 16 | 59 | ≤ 409 | 111 | ≤ 10760 | 163 | ≤ 283197 | 215 | ≤ 7453933 |
| 8 | ≤ 17 | 60 | ≤ 436 | 112 | ≤ 11458 | 164 | ≤ 301579 | 216 | ≤ 7937777 |
| 9 | ≤ 18 | 61 | ≤ 464 | 113 | ≤ 12202 | 165 | ≤ 321155 | 217 | ≤ 8453028 |
| 10 | ≤ 19 | 62 | ≤ 494 | 114 | ≤ 12994 | 166 | ≤ 342002 | 218 | ≤ 9001725 |
| 11 | ≤ 20 | 63 | ≤ 526 | 115 | ≤ 13838 | 167 | ≤ 364202 | 219 | ≤ 9586039 |
| 12 | ≤ 22 | 64 | ≤ 560 | 116 | ≤ 14736 | 168 | ≤ 387842 | 220 | ≤ 10208280 |
| 13 | ≤ 23 | 65 | ≤ 597 | 117 | ≤ 15692 | 169 | ≤ 413018 | 221 | ≤ 10870913 |
| 14 | ≤ 25 | 66 | ≤ 635 | 118 | ≤ 16711 | 170 | ≤ 439827 | 222 | ≤ 11576557 |
| 15 | ≤ 26 | 67 | ≤ 677 | 119 | ≤ 17795 | 171 | ≤ 468377 | 223 | ≤ 12328006 |
| 16 | ≤ 28 | 68 | ≤ 720 | 120 | ≤ 18951 | 172 | ≤ 498780 | 224 | ≤ 13128233 |
| 17 | ≤ 30 | 69 | ≤ 767 | 121 | ≤ 20181 | 173 | ≤ 531156 | 225 | ≤ 13980403 |
| 18 | ≤ 32 | 70 | ≤ 817 | 122 | ≤ 21491 | 174 | ≤ 565634 | 226 | ≤ 14887889 |
| 19 | ≤ 34 | 71 | ≤ 870 | 123 | ≤ 22885 | 175 | ≤ 602350 | 227 | ≤ 15854280 |
| 20 | ≤ 36 | 72 | ≤ 926 | 124 | ≤ 24371 | 176 | ≤ 641449 | 228 | ≤ 16883401 |
| 21 | ≤ 38 | 73 | ≤ 987 | 125 | ≤ 25953 | 177 | ≤ 683087 | 229 | ≤ 17979324 |
| 22 | ≤ 40 | 74 | ≤ 1051 | 126 | ≤ 27638 | 178 | ≤ 727427 | 230 | ≤ 19146385 |
| 23 | ≤ 43 | 75 | ≤ 1119 | 127 | ≤ 29431 | 179 | ≤ 774645 | 231 | ≤ 20389201 |
| 24 | ≤ 46 | 76 | ≤ 1191 | 128 | ≤ 31342 | 180 | ≤ 824928 | 232 | ≤ 21712690 |
| 25 | ≤ 49 | 77 | ≤ 1269 | 129 | ≤ 33376 | 181 | ≤ 878475 | 233 | ≤ 23122088 |
| 26 | ≤ 52 | 78 | ≤ 1351 | 130 | ≤ 35543 | 182 | ≤ 935498 | 234 | ≤ 24622972 |
| 27 | ≤ 55 | 79 | ≤ 1439 | 131 | ≤ 37850 | 183 | ≤ 996222 | 235 | ≤ 26221280 |
| 28 | ≤ 59 | 80 | ≤ 1532 | 132 | ≤ 40307 | 184 | ≤ 1060888 | 236 | ≤ 27923336 |
| 29 | ≤ 62 | 81 | ≤ 1631 | 133 | ≤ 42923 | 185 | ≤ 1129752 | 237 | ≤ 29735875 |
| 30 | ≤ 66 | 82 | ≤ 1737 | 134 | ≤ 45709 | 186 | ≤ 1203085 | 238 | ≤ 31666069 |
| 31 | ≤ 71 | 83 | ≤ 1850 | 135 | ≤ 48676 | 187 | ≤ 1281179 | 239 | ≤ 33721553 |
| 32 | ≤ 75 | 84 | ≤ 1970 | 136 | ≤ 51836 | 188 | ≤ 1364342 | 240 | ≤ 35910462 |
| 33 | ≤ 80 | 85 | ≤ 2098 | 137 | ≤ 55200 | 189 | ≤ 1452903 | 241 | ≤ 38241455 |
| 34 | ≤ 85 | 86 | ≤ 2234 | 138 | ≤ 58784 | 190 | ≤ 1547213 | 242 | ≤ 40723756 |
| 35 | ≤ 91 | 87 | ≤ 2379 | 139 | ≤ 62599 | 191 | ≤ 1647644 | 243 | ≤ 43367187 |
| 36 | ≤ 97 | 88 | ≤ 2533 | 140 | ≤ 66663 | 192 | ≤ 1754595 | 244 | ≤ 46182206 |
| 37 | ≤ 103 | 89 | ≤ 2698 | 141 | ≤ 70990 | 193 | ≤ 1868488 | 245 | ≤ 49179951 |
| 38 | ≤ 110 | 90 | ≤ 2873 | 142 | ≤ 75598 | 194 | ≤ 1989774 | 246 | ≤ 52372284 |
| 39 | ≤ 117 | 91 | ≤ 3059 | 143 | ≤ 80505 | 195 | ≤ 2118933 | 247 | ≤ 55771835 |
| 40 | ≤ 124 | 92 | ≤ 3258 | 144 | ≤ 85730 | 196 | ≤ 2256475 | 248 | ≤ 59392055 |
| 41 | ≤ 132 | 93 | ≤ 3469 | 145 | ≤ 91295 | 197 | ≤ 2402946 | 249 | ≤ 63247269 |
| 42 | ≤ 141 | 94 | ≤ 3694 | 146 | ≤ 97221 | 198 | ≤ 2558924 | 250 | ≤ 67352729 |
| 43 | ≤ 150 | 95 | ≤ 3934 | 147 | ≤ 103532 | 199 | ≤ 2725027 | 251 | ≤ 71724679 |
| 44 | ≤ 160 | 96 | ≤ 4189 | 148 | ≤ 110252 | 200 | ≤ 2901912 | 252 | ≤ 76380419 |
| 45 | ≤ 170 | 97 | ≤ 4461 | 149 | ≤ 117409 | 201 | ≤ 3090279 | 253 | ≤ 81338368 |
| 46 | ≤ 181 | 98 | ≤ 4751 | 150 | ≤ 125030 | 202 | ≤ 3290873 | 254 | > 81338368 |
| 47 | ≤ 193 | 99 | ≤ 5059 | 151 | ≤ 133146 | 203 | ≤ 3504487 | 255 | Reserved |
| 48 | ≤ 205 | 100 | ≤ 5387 | 152 | ≤ 141789 | 204 | ≤ 3731968 | | |
| 49 | ≤ 218 | 101 | ≤ 5737 | 153 | ≤ 150992 | 205 | ≤ 3974215 | | |
| 50 | ≤ 233 | 102 | ≤ 6109 | 154 | ≤ 160793 | 206 | ≤ 4232186 | | |
| 51 | ≤ 248 | 103 | ≤ 6506 | 155 | ≤ 171231 | 207 | ≤ 4506902 | | |

As shown in Table 1, for example, an interval length of a buffer status value interval indicated by a BSR index 47 is 12 (where the length is a length of an interval from 181 to 193 (including 181 or 193)). An interval length of a buffer status value interval indicated by a BSR index 148 is 6720 (where the length is a length of an interval from 103532 to 110252 (including 103532 or 110252)). An interval length of a buffer status value interval indicated by a BSR index 251 is 4371950 (where the length is a length of an interval from 67352729 to 71724679 (including 67352729 or 71724679)). An excessively large interval length of a buffer status value interval makes it difficult for the network device 110 to configure an appropriate communication resource for the terminal device 120.

In an example, when the data amount of the uplink data of the terminal device 120 is 80 Mbytes, the data amount of the uplink data falls within a buffer status value interval indicated by a BSR index 253. The network device 110 determines, based on the BSR reported by the terminal device 120, the buffer status value interval indicated by the BSR index 253, but may fail to accurately obtain an actual data amount of the terminal device 120. The communication resource configured by the network device 110 for the terminal device 120 based on the BSR may fail to meet a service transmission requirement of the terminal device 120. For example, if a quantity of communication resources configured by the network device 110 for the terminal device 120 is less than a quantity of communication resources required by 80 Mbytes, a problem of deficiency of allocated communication resources is caused. Alternatively, if a quantity of communication resources configured by the network device 110 for the terminal device 120 is greater than a quantity of communication resources required by 80 Mbytes, a problem of a waste of allocated communication resources is caused.

It may be learned from Table 1 that a service with a data amount that falls within 0 to 81 Mbytes can be fed back in Table 1. If a data amount of a specific service of the terminal device 120 exceeds this range, the network device 110 may fail to configure an appropriate communication resource for the terminal device 120.

In conclusion, an existing BSR reporting mechanism may fail to provide higher-precision feedback of a service data amount. Correspondingly, the network device 110 cannot provide a more accurate communication resource configuration for the terminal device 120, causing the problem such as the waste or deficiency of allocated communication resources.

In view of the foregoing technical problem, this application provides a method for reporting a buffer status report and a communication apparatus. A second communication apparatus (for example, a network device) can configure a more accurate communication resource for service transmission of a first communication apparatus (a terminal device) based on a BSR reported by the first communication apparatus (for example, the terminal device), to avoid a problem such as a waste or deficiency of allocated communication resources.

The following describes the method for reporting a buffer status report and the communication apparatus in this application with reference to the accompanying drawings.

FIG. 2 is a schematic interaction flowchart of a method 200 for reporting a buffer status report according to an embodiment of this application. A method procedure in FIG. 2 may be performed by a first communication apparatus and a second communication apparatus, or may be performed by modules and/or components (for example, chips or integrated circuits) that are installed in the first communication apparatus and the second communication apparatus and that have corresponding functions. This is not limited in this embodiment of this application. The first communication apparatus may be a terminal device 120, and the second communication apparatus may be a network device 110. This embodiment of this application is applicable to communication between the network device and the terminal device, communication between terminal devices, communication between network devices, communication between other devices, or the like. This is not limited in this embodiment of this application. The following uses the first communication apparatus and the second communication apparatus as an example for description. As shown in FIG. 2, the method 200 includes the following steps.

S210: The first communication apparatus sends a BSR 1 to the second communication apparatus, where the BSR 1 includes a first parameter and a second parameter, the first parameter indicates a BSR index A, the second parameter is an associated parameter of the BSR index A, the first parameter and the second parameter indicate a data amount of a service A of the first communication apparatus, and the BSR index A indicates a buffer status value interval.

Correspondingly, the second communication apparatus receives the BSR 1 from the first communication apparatus.

In S210, the BSR 1 sent by the first communication apparatus to the second communication apparatus includes two parameters, which are respectively the first parameter and the second parameter. The first parameter indicates the BSR index A in a BSR table (which may be a short BSR table or a long BSR table, where this is not limited in this application), and the second parameter is the associated parameter of the BSR index A.

A meaning of the "associated parameter" is that after determining, based on the first parameter, the buffer status value interval indicated by the BSR index A, the second communication apparatus further determines the data amount of the service A of the first communication apparatus based on the second parameter (or the second communication apparatus more accurately determines, based on the second parameter, a buffer status value interval within which the data amount of the service A falls). Details are described below.

In an existing BSR reporting mechanism, a BSR reported by a first communication apparatus to a second communication apparatus includes only a first parameter. This can only achieve an objective of indicating a specific BSR index in a BSR table to the second communication apparatus. The second communication apparatus obtains information about a data amount of a service A of the first communication apparatus based on the BSR index. However, as described above, when a data amount of a specific service of the first communication apparatus is large, the second communication apparatus may fail to configure an appropriate communication resource for transmission of the service with the large data amount of the first communication apparatus, causing a problem such as a waste or deficiency of allocated communication resources.

The BSR 1 is designed to include the first parameter and the second parameter. The second communication apparatus determines the BSR index A based on the first parameter, and then more accurately determines information about the data amount of the service A of the first communication apparatus based on the second parameter, so that the second communication apparatus more accurately obtains the information about the data amount of the service A of the first communication apparatus, and configures an appropriate communication resource for the first communication apparatus, to avoid the problem such as the waste or deficiency of allocated communication resources.

In a possible implementation, the "associated parameter" may alternatively be that the first parameter and the second parameter jointly indicate the data amount of the service A of the first communication apparatus.

In comparison with a manner in which only the first parameter indicates the data amount of the service A of the first communication apparatus, in the manner of combining the first parameter and the second parameter to indicate the data amount, the second communication apparatus can more accurately obtain the information about the data amount of the service A of the first communication apparatus.

S220: The second communication apparatus sends configuration information 1 to the first communication apparatus, where the configuration information 1 is used for configuring a communication resource used by the first communication apparatus to transmit the service A.

Correspondingly, the first communication apparatus receives the configuration information 1 sent by the second communication apparatus, and transmits the service A based on the communication resource configured by using the configuration information 1.

Specifically, the second communication apparatus determines the configuration information 1 based on the BSR 1 sent by the first communication apparatus, and sends the configuration information 1 to the first communication apparatus.

More specifically, the second communication apparatus determines the data amount of the service A based on the first parameter and the second parameter, and the second communication apparatus determines the configuration information 1 based on the data amount of the service A.

As described above, the BSR 1 includes the first parameter and the second parameter. The first parameter indicates the BSR index A, and the second parameter is the associated parameter of the BSR index A. The second communication apparatus can more accurately obtain the information about the data amount of the service A of the first communication apparatus based on the first parameter and the second parameter, and configure the appropriate communication resource for the first communication apparatus based on the data amount of the service A.

In a possible implementation, the BSR 1 further includes a third parameter. The third parameter indicates that the first communication apparatus has uplink data (which may be understood as the service A) that needs to be transmitted.

For example, the third parameter is a logical channel group (logical channel group, LCG) identifier. One LCG includes one or more logical channels (logical channels, LCHs). The LCG identifier indicates that a specific LCG of the first communication apparatus needs to transmit uplink data (which may be understood as the service A) or report a buffer size (buffer size).

In this embodiment of this application, the communication resource may include one or more of a time domain resource, a frequency domain resource, a codebook resource, or the like, and may further include another type of resource, for example, an antenna port or a transmit beam. This is not limited in this application.

In this embodiment of this application, the data amount of the service A may be a fixed value (for example, 5 Mbytes), or may be a value interval (for example, 100 Kbytes to 200 Kbytes). This is not limited in this application, either.

According to the foregoing technical solution, in this application, the second communication apparatus (the network device) can configure a more accurate communication resource for service transmission of the first communication apparatus (the terminal device) based on the BSR reported by the first communication apparatus (the terminal device), to avoid the problem such as the waste or deficiency of allocated communication resources.

Specifically, the second communication apparatus determines the BSR index based on the first parameter in the BSR reported by the first communication apparatus, and then determines the buffer status value interval corresponding to the SBR index. Because the second parameter is the associated parameter of the BSR index, the second communication apparatus further determines the data amount of the service of the first communication apparatus based on the associated parameter and with reference to the buffer status value interval. In comparison with an existing BSR structure, in this application, the associated parameter is configured for the first parameter, so that the data amount of the service of the first communication apparatus can be more accurately indicated.

For example, if the data amount of the service of the first communication apparatus exceeds a maximum buffer status value interval that can be indicated by the BSR table, a coefficient used for an addition operation of a buffer status value interval in the BSR table is configured, so that the second communication apparatus can more accurately obtain the data amount of the service of the first communication apparatus based on the first parameter and the second parameter that are reported by the first communication apparatus.

According to the foregoing technical solution, in this application, the second communication apparatus can configure the more accurate communication resource for service transmission of the first communication apparatus based on the BSR reported by the first communication apparatus, to avoid the waste or deficiency of allocated communication resources.

In a possible implementation, the second parameter includes at least one of the following:
an interval index, an operation coefficient, or an indication parameter.

Specifically, the interval index indicates a subinterval in the buffer status value interval indicated by the BSR index A. The operation coefficient is used for an operation (which may include an addition operation and a multiplication operation) of the buffer status value interval indicated by the BSR index A. The indication parameter indicates whether the operation coefficient needs to be used.

In this application, the foregoing several parameters can more accurately indicate the data amount of the service of the first communication apparatus, and the second communication apparatus may also configure the more accurate communication resource for service transmission of the first communication apparatus based on a combination of the foregoing several parameters and the first parameter, to avoid the waste or deficiency of allocated communication resources.

For example, the second parameter includes the interval index. The interval index indicates a specific subinterval in the buffer status value interval indicated by the first parameter. The second communication apparatus determines the specific subinterval in the buffer status value interval based on the buffer status value interval indicated by the first parameter and the interval index. In this case, the subinterval may be closer to an actual data amount of the service of the first communication apparatus. In comparison with a manner in which only the buffer status value interval is indicated, in this application, the second communication apparatus can configure the more accurate communication resource for service transmission of the first communication apparatus.

For another example, when the second parameter includes the operation coefficient, the second communication apparatus performs, based on the operation coefficient, an operation, for example, a multiplication operation or an addition operation, on the buffer status value interval indicated by the first parameter, to obtain a more accurate buffer status value interval. The new buffer status value interval obtained by performing the operation may be closer to an actual data amount of the service of the first communication apparatus. In comparison with a manner in which only the buffer status value interval is indicated, in this application, the second communication apparatus can configure the more accurate communication resource for service transmission of the first communication apparatus.

The operation coefficient is used for an operation on the buffer status value interval indicated by the BSR index A. This may be understood as that an operation is separately performed on an interval upper limit and an interval lower limit of the buffer status value interval by using the operation coefficient.

In an example, if the buffer status value interval is (100, 200], and the operation coefficient is a, the operation on the buffer status value interval is (100 + a, 200 + a], or (100*a, 200*a].

Optionally, the operation coefficient a may be a negative number, or may be a fraction. This is not limited in this application.

In this embodiment of this application, the several parameters (for example, the interval index, the operation coefficient, or the indication parameter) listed above may be coupled to each other. A specific coupling manner is not limited in this application. For ease of description, the following describes functions of the parameters one by one in this application, and does not describe a coupling function between two parameters or three parameters. Unified descriptions are provided herein, and details are not described below.

Based on the foregoing several parameters, in this application, BSR reporting can be implemented more accurately (or with higher precision), and the second communication apparatus can more accurately obtain the information about the data amount of the service of the first communication apparatus.

In a possible implementation, when the service A is an extended reality (extended reality, XR) service, the buffer status value interval is a parameter in the long BSR table.

Optionally, when the service A is the XR service, and the first communication apparatus performs BSR reporting for the service A by using the long BSR table, the BSR may include the first parameter, and does not include the second parameter.

Specifically, this application supports configuring corresponding quality of service (quality of service, QoS) for different services. When determining that QoS of a specific service meets a standard (for example, is greater than or equal to a QoS threshold), the terminal device may determine that the service is the XR service, and may select the long BSR table to report a data amount of the service of the terminal device to the network device. In this way, high-precision BSR reporting for a service with a large data amount can be supported.

It should be understood that a data amount of the XR service is generally large. If BSR feedback is performed by using the short BSR table, the second communication apparatus may fail to configure sufficient communication resources for service transmission of the first communication apparatus. Therefore, it is stipulated that, for transmission of the XR service, BSR feedback may be performed by using the long BSR table, so that the second communication apparatus can configure sufficient communication resources for service transmission of the first communication apparatus.

In a possible implementation, the network device 110 configures an indication parameter A (for example, an enhanced BSR) for a data radio bearer (data radio bearer, DRB), the LCH, or the LCG by using RRC signaling, where the indication parameter A indicates that when the service A is the XR service, the terminal device 120 performs BSR reporting by using the long BSR table.

Specifically, the network device 110 configures the indication parameter A in a configuration information element of the DRB, the LCH, or the BSR. For the DRB/LCH/LCG, when the terminal device 120 triggers a regular BSR (regular BSR) or a periodic BSR (periodic BSR), if there is only one LCG to transmit data (or there may be a plurality of LCGs to transmit data, where this is not limited in this application), the terminal device 120 performs BSR reporting by using the long BSR.

In a possible implementation, the network device 110 configures the indication parameter A for the terminal device 120 (as described above), and the network device 110 and the terminal device 120 agree on a buffer status value interval. The buffer status value interval may be determined in a form of protocol predefinition (for example, greater than 150 Kbytes) or pre-configuration performed by using the RRC signaling (where for example, a BSR index corresponding to the buffer status value interval is carried in the configuration information element of the BSR). When the terminal device 120 triggers the regular BSR or the periodic BSR, if there is only one LCG to transmit data, and a data amount falls within the buffer status value interval, the terminal device 120 performs BSR reporting by using the long BSR table (in this case, a structure form of the BSR is not limited in this application).

Optionally, this application supports combining the foregoing two manners for use. For example, the network device 110 configures the indication parameter A for the DRB, the LCH, or the LCG, and the network device 110 and the terminal device 120 agree on a buffer status value interval. For the DRB/LCH/LCG, when the terminal device 120 triggers the regular BSR or the periodic BSR, if there is only one LCG to transmit data, and a data amount falls within the agreed-on buffer status value interval, the terminal device 120 performs BSR reporting by using the long BSR table.

In conclusion, in this application, the DRB/LCH/LCG or the buffer status value interval is specified, and when there is only one LCG to transmit data, the terminal device performs BSR reporting by using the long BSR table. This can implement higher-precision BSR reporting, assist the network device in scheduling resources more efficiently, and improve user experience and increase a network capacity of the XR service. In addition, for a non-XR service or a service with a small data amount, the terminal device may still use the short BSR to perform BSR reporting, to reduce signaling overheads.

In a possible implementation, when the first communication apparatus determines that the data amount of the service A ≤ 150 Kbytes (which may alternatively be another value), the buffer status value interval is a parameter in the short BSR table. In this way, bit overheads used for BSR reporting can be reduced.

In a possible implementation, when the first communication apparatus determines that the data amount of the service A ≥ 150 Kbytes (which may alternatively be another value), the buffer status value interval is a parameter in the long BSR table. In this way, high-precision BSR reporting for a service with a large data amount can be supported.

In this application, the first communication apparatus can determine an appropriate BSR table based on the data amount of the service. For example, when the data amount of the service is small (≤ 150 Kbytes), the short BSR table may be used. When the data amount of the service is large (> 150 Kbytes), the long BSR table may be used. In this way, BSR reporting precision of the data amount of the service can be improved.

The following further describes the method for reporting a buffer status report shown in FIG. 2 with reference to another accompanying drawing.

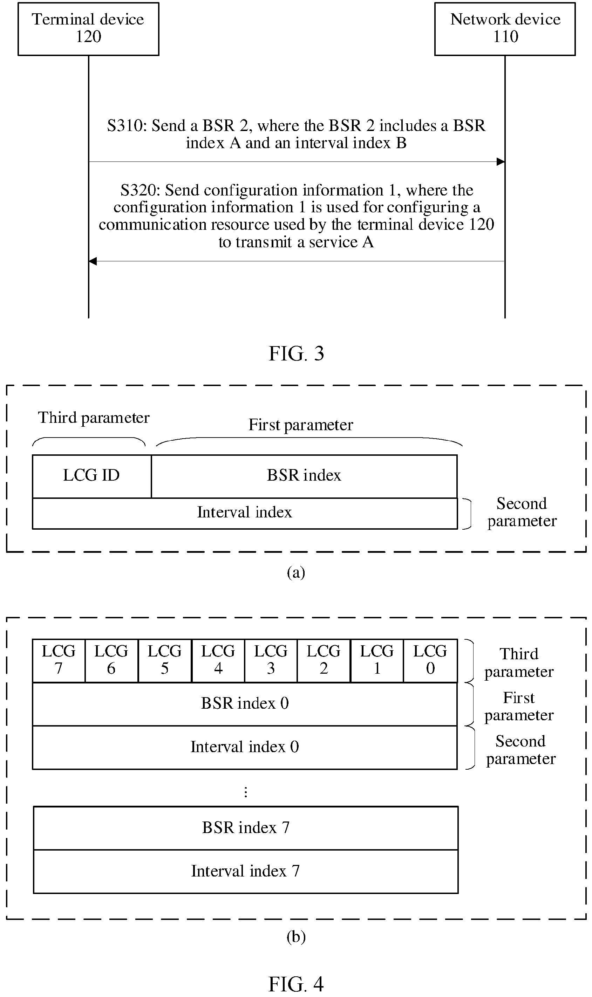

FIG. 3 is a schematic interaction flowchart of a method 300 for reporting a buffer status report according to an embodiment of this application. A method procedure in FIG. 3 may be performed by a terminal device and a network device, or may be performed by modules and/or components (for example, chips or integrated circuits) that are installed in the terminal device and the network device and that have corresponding functions. This is not limited in this embodiment of this application. The following uses the terminal device and the network device as an example for description. As shown in FIG. 3, the method 300 includes the following steps.

S310: A terminal device 120 sends a BSR 2 to a network device 110, where the BSR 2 includes a BSR index A and an interval index B.

Correspondingly, the network device 110 receives the BSR 2 from the terminal device 120.

For detailed descriptions of S310, refer to the descriptions of S210. Details are not described herein again.

Specifically, the interval index B indicates a specific subinterval in a buffer status value interval indicated by the BSR index A. For ease of description, Table 1 is used as an example for description in this application.

In an example, the BSR index A is 190, the buffer status value interval indicated by the BSR index A is (1452903, 1547213] (which may be queried in Table 1), and an interval length of the buffer status value interval is 94310. If the terminal device 120 reports only the BSR index A, the network device 110 can only obtain that a data amount of a service of the terminal device 120 falls within the buffer status value interval indicated by the BSR index A, and may fail to obtain more accurate information about the data amount of the service A.

In an example, this application supports performing subinterval division on the buffer status value interval. For example, the buffer status value interval (1452903, 1547213] is divided into a plurality of subintervals, for example, a subinterval 1 (1452903, 1453500], a subinterval 2 (1453500, 1545000], a subinterval 3 (145500, 1547213], ..., and a subinterval N (1540000, 1547213]), and one interval index is configured for each subinterval. Interval lengths of the subintervals may be consistent or inconsistent. This is not limited in this application.

For example, the BSR 2 further includes an interval index B = 1. The network device 110 accurately obtains, based on the interval index B = 1, that the data amount of the service A falls within (1452903, 1453500]. In comparison with a case in which the data amount of the service A obtained by the network device 110 by using only the BSR index A = 190 falls within (1452903, 1547213], in this case, a configuration error can be reduced (for example, an error of 93713 bytes is reduced) when the network device 110 configures a communication resource for transmission of the service A, thereby avoiding a problem such as a waste or deficiency of allocated communication resources.

In a possible implementation, this application supports adding several subintervals to each buffer status value interval in an existing BSR table, to form a smaller BSR table. The terminal device 120 reports a corresponding interval index to the network device 110 by using an added indication field (for example, a second parameter).

In a possible implementation, the foregoing subinterval division may be indicated by the network device 110 to the terminal device 120. For example, the network device 110 configures a correspondence between a plurality of subintervals and an interval index for the terminal device 120 by using RRC signaling, or the foregoing subinterval division may be determined through protocol predefinition.

In a possible implementation, based on the existing BSR table, the terminal device 120 and the network device 110 perform subinterval division on the reported buffer status value interval by using a consistent mathematical operation.

Specifically, the terminal device 120 reports a related parameter to the network device 110, and the network device 110 calculates a location of the data amount of the service A of the terminal device 120 in the buffer status value interval based on the parameter.

In a possible implementation, a mathematical operation manner may be a linear operation or a non-linear operation.

Optionally, the buffer status value interval is evenly or unevenly divided into subintervals.

Optionally, the network device 110 configures the mathematical operation manner for the terminal device 120 by using the RRC signaling.

This application supports extending the existing BSR table (including a long BSR table or a short BSR table) to a larger BSR table, and a quantity of bits (used for BSR feedback) of a BSR-medium access control-control element (medium access control-control element, MAC CE) may be increased. The terminal device 120 reports, to the network device 110 based on the extended BSR table, a BSR index corresponding to the buffer status value interval. In this way, high-precision BSR reporting can also be implemented.

FIG. 4 is a diagram of a structure of a BSR according to an embodiment of this application. The BSR shown in (a) in FIG. 4 is specific to a short BSR table. Specifically, the BSR 2 includes a first parameter (buffer size), a second parameter (finer granularity indication), and a third parameter (LCG ID). The first parameter indicates a BSR index A, the second parameter indicates an interval index B, and the third parameter indicates the LCG identifier. For example, this application supports using five bits to indicate the first parameter, using three bits to indicate the third parameter, and using one or more bits to indicate the second parameter.

The BSR shown in (b) in FIG. 4 is specific to a long BSR table. Specifically, the BSR 2 includes a plurality of first parameters (buffer sizes), a plurality of second parameters (finer granularity indications), and a third parameter. The first parameter indicates a BSR index A, the second parameter indicates an interval index B, and the third parameter indicates an LCG identifier. For example, this application supports using eight bits to indicate each first parameter, and using eight bits to indicate the third parameter. For example, that a specific LCG has uplink data that needs to be transmitted is indicated in a manner of a bitmap. For example, the bitmap includes eight bits, and each bit indicates whether one LCG ID has uplink data that needs to be transmitted. For example, when a bit is 1, it indicates that there is data that needs to be transmitted; or when a bit is 0, it indicates that there is no data that needs to be transmitted. One or more bits indicate each second parameter.

It should be understood that, in a structure shown in (b) in FIG. 4, each second parameter and each first parameter are associated with one LCG that needs to transmit uplink data. For example, a second parameter 1 is associated with a first parameter 1, and the first parameter 1 is associated with an LCG 1.

In a possible implementation, before the terminal device 120 sends the BSR 2 to the network device 110, the terminal device 120 determines that the data amount of the service A falls within a subinterval indicated by the interval index B. In this way, the network device 120 can accurately obtain an actual data amount of the service A of the terminal device 110.

Optionally, the network device 110 configures a determining condition for the terminal device 120 by using RRC signaling. When determining that the data amount of the service A meets the determining condition, the terminal device 120 reports the BSR 2 to the network device 110. A determining result may include that the data amount of the service A falls within the subinterval indicated by the interval index B.

Specifically, the network device 110 configures the determining condition in an information element of a BSR, a DRB, or an LCH.

In a possible implementation, the network device 110 configures one buffer status value interval (for example, configures an interval upper limit and an interval lower limit of one buffer status value interval, where the data amount of the service A falls within the interval lower limit and the interval upper limit of the buffer status value interval). When the terminal device 120 triggers the BSR, if a data amount of a specific LCH/LCG of the terminal device 120 falls within the buffer status value interval, the terminal device 120 reports the BSR 2 to the network device 110.

S320: The network device 110 sends configuration information 1 to the terminal device 120, where the configuration information 1 is used for configuring a communication resource used by the terminal device 120 to transmit the service A.

Correspondingly, the terminal device 120 receives the configuration information 1 from the network device 110.

For detailed descriptions of S320, refer to the descriptions of S220. Details are not described herein again.

For example, the buffer status value interval (1452903, 1547213] indicated by the BSR index A = 190 is divided into a plurality of subintervals, for example, a subinterval 1 (1452903, 1453500], a subinterval 2 (1453500, 1545000], a subinterval 3 (145500, 1547213], ..., and a subinterval N (1540000, 1547213], and one interval index is configured for each subinterval. The BSR 2 further includes the interval index B = 1. The network device 110 accurately obtains, based on the interval index B=1, that the data amount of the service A falls within (1452903, 1453500]. In comparison with a case in which the data amount of the service A obtained by the network device 110 by using only the BSR index A = 190 falls within (1452903, 1547213], in this case, an error can be reduced (for example, an error of 93713 bytes is reduced) when the network device 110 configures the communication resource for transmission of the service A, thereby avoiding the problem such as the waste or deficiency of allocated communication resources.

It should be understood that in the embodiment shown in FIG. 3, this application supports performing BSR reporting by using an existing BSR table.

The second parameter with a finer granularity is reported based on the existing BSR table, so that higher-precision BSR reporting can be implemented in this application.

In this application, the network device can further efficiently schedule the communication resource, to avoid the problem such as the waste or deficiency of allocated communication resources.

This application further supports retaining the existing BSR table, so that an existing BSR reporting precision level can be maintained, thereby avoiding a serious waste of communication resources caused because subinterval division of the BSR table does not match the data amount of the service.

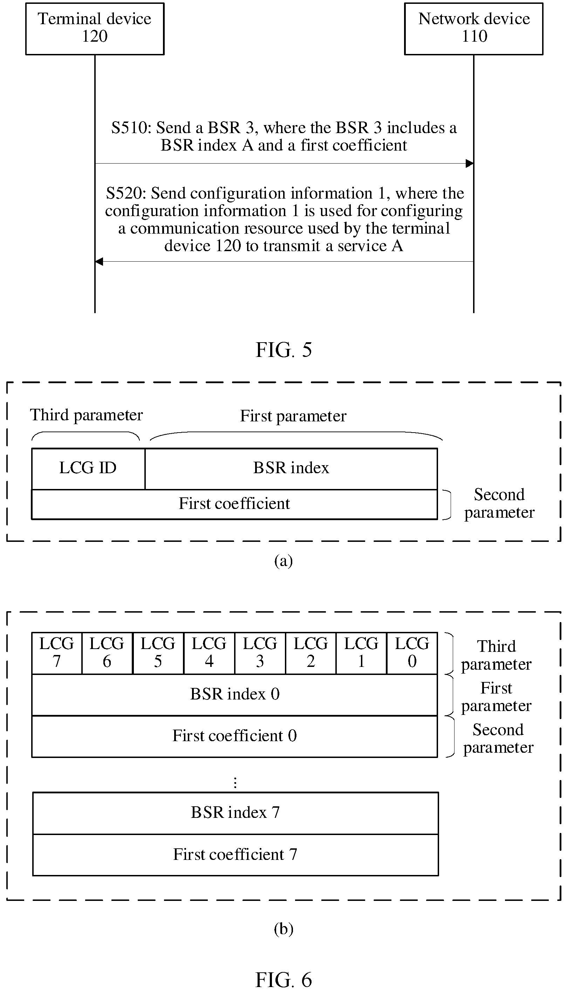

FIG. 5 is a schematic interaction flowchart of a method 500 for reporting a buffer status report according to an embodiment of this application. A method procedure in FIG. 5 may be performed by a terminal device and a network device, or may be performed by modules and/or components (for example, chips or integrated circuits) that are installed in the terminal device and the network device and that have corresponding functions. This is not limited in this embodiment of this application. The following uses the terminal device and the network device as an example for description. As shown in FIG. 5, the method 500 includes the following steps.

S510: The terminal device 120 sends a BSR 3 to the network device 110, where the BSR 3 includes a BSR index A and a first coefficient.

Correspondingly, the network device 110 receives the BSR 3 from the terminal device 120.

For detailed descriptions of S510, refer to the descriptions of S210. Details are not described herein again.

Specifically, the first coefficient is used for an addition operation of a buffer status value interval indicated by the BSR index A. For ease of description, Table 1 is used as an example for description in this application.

It should be understood that the addition operation may also be considered as a subtraction operation. For example, if the first coefficient is a negative number, the addition operation may be understood as a subtraction operation.

Specifically, when the terminal device 120 triggers the BSR, the terminal device 120 determines whether a data amount of a service A is greater than the first coefficient (which may also be understood as a delta parameter) configured by the network device 110. If the data amount of the service A is greater than the first coefficient, the terminal device 120 determines the BSR index A based on a difference between the data amount of the service A and the first coefficient, and then the terminal device 120 reports the BSR 3 to the network device 110.

Because the data amount of the service A of the terminal device 120 is greater than the first coefficient, the buffer status value interval indicated by the BSR index A is associated with the first coefficient. For example, if the data amount of the service A of the terminal device 120 is 100.04 Mbytes, and the first coefficient is 100 Mbytes, the buffer status value interval indicated by the BSR index A needs to include 0.04 Mbytes. It may be learned from Table 1 that, a buffer status value interval indicated by a BSR index of 132 is (37850, 40307]. Because an interval length of the buffer status value interval is 2457, with reference to the first coefficient = 100 Mbytes and the BSR index A = 132, the network device 110 obtains an accurate data amount of the service A of the terminal device 120, and configures an appropriate communication resource for the service A, to avoid a problem such as a waste or deficiency of allocated communication resources.

Specifically, the data amount of the service A is 100.04 Mbytes, and the terminal device 120 reports a BSR index A = 254 to the network device 110. The network device 110 can determine that the data amount of the service A is greater than 81 Mbytes, but may fail to accurately obtain information about the data amount of the service A. According to the foregoing solution, in this application, the network device 110 can more accurately obtain the data amount of the service A, and configure the appropriate communication resource for the service A.

In a possible implementation, the terminal device 120 reports, to the network device 110, statistical information related to a data packet size, for example, information such as an average packet size and a maximum/minimum value.

Optionally, the terminal device 120 reports information such as a data arrival periodicity/frame rate to the network device 110.

For example, the terminal device 120 reports, to the network device 110, information such as a rate R of 200 Mbps of a data stream and a frame rate F of 60 fps. The network device 110 determines, based on the information, that an average value (mean) of a data frame is 416.7 Kbytes. The network device 110 determines that a value of the first coefficient is 416.7 Kbytes, and delivers the value of the first coefficient to the terminal device 120.

It should be understood that the foregoing parameters may be used for assisting the network device 110 in configuring one or more candidate first coefficients.

In a possible implementation, the network device 110 delivers a plurality of candidate first coefficients to the terminal device 120. The terminal device 120 selects an appropriate first coefficient from the plurality of candidate first coefficients based on a service transmission requirement of the terminal device 120, and reports the appropriate first coefficient to the network device 110, so that the network device 110 more accurately obtains the information about the data amount of the service A.

In a possible implementation, the terminal device 120 reports one or more candidate first coefficients to the network device 110. The network device 110 determines a plurality of appropriate candidate first coefficients from the one or more candidate first coefficients reported by the terminal device 120, and delivers the plurality of appropriate candidate first coefficients to the terminal device 120.

In a possible implementation, the terminal device 120 sends an indication parameter to the network device 110, where the indication parameter indicates whether the BSR index A needs to be combined with the first coefficient. Specifically, one first coefficient is configured between the terminal device 120 and the network device 110, and the terminal device 120 indicates, by using one or more bits, whether the first coefficient is needed.

In a possible implementation, the network device 110 configures one or more candidate first coefficients for the terminal device 120 by using RRC signaling. Specifically, a configuration form may be a value in a unit of bytes/Kbytes/Mbytes, or may be an index corresponding to the value in the unit of bytes/Kbytes/Mbytes. The configuration form of the first coefficient is not limited in this application.

In a possible implementation, the network device 110 may configure one or more candidate first coefficients for each LCG.

In a possible implementation, when a plurality of candidate first coefficients are configured for the terminal device 120, one index may be configured for each candidate first coefficient. The terminal device 120 includes an index of a specific first coefficient in the BSR 3, so that the network device 110 determines a first coefficient that needs to be used to determine the data amount of the service A.

FIG. 6 is a diagram of another structure of a BSR according to an embodiment of this application. The BSR shown in (a) in FIG. 6 is specific to a short BSR table. Specifically, the BSR 3 includes a first parameter (buffer size), a second parameter (first coefficient), and a third parameter (LCG ID). The first parameter indicates a BSR index A, the second parameter is used for an addition operation of a buffer status value interval, and the third parameter indicates the LCG identifier. For example, this application supports using five bits to indicate the first parameter, using three bits to indicate the third parameter, and using one or more bits to indicate the second parameter.

The BSR shown in (b) in FIG. 6 is specific to a long BSR table. Specifically, the BSR 3 includes a plurality of first parameters (buffer sizes), a plurality of second parameters (first coefficients), and a third parameter (LCG ID). The first parameter indicates a BSR index A, the second parameter is used for an addition operation of a buffer status value interval, and the third parameter indicates the LCG identifier. For example, this application supports using eight bits to indicate each first parameter, using one or more bits to indicate each second parameter, and using eight bits to indicate the third parameter. For example, that a specific LCG has uplink data that needs to be transmitted is indicated in a manner of a bitmap. For example, the bitmap includes eight bits, and each bit indicates whether one LCG ID has uplink data that needs to be transmitted. For example, when a bit is 1, it indicates that there is data that needs to be transmitted; or when a bit is 0, it indicates that there is no data that needs to be transmitted.

It should be understood that, in a structure shown in (b) in FIG. 6, each second parameter and each first parameter are associated with one LCG that needs to transmit uplink data. For example, a second parameter 2 is associated with a first parameter 2, and the first parameter 2 is associated with an LCG 2.

In a possible implementation, this application supports indicating the first coefficient by explicitly adding an indication field to a BSR MAC CE, and also supports implicitly indicating the first coefficient by using a MAC subheader. For example, a specific LC ID (for example, 37) indicates that the first coefficient needs to be added, or a reserved bit (reserved bit) indicates an index corresponding to a specific first coefficient (where the network device 110 configures a plurality of candidate first coefficients for the terminal device 120).

Optionally, this application supports separately configuring different first coefficients for the long BSR table and the short BSR table.

S520: The network device 110 sends configuration information 1 to the terminal device 120, where the configuration information 1 is used for configuring a communication resource used by the terminal device 120 to transmit the service.

Correspondingly, the terminal device 120 receives the configuration information 1 from the network device 110.

For detailed descriptions of S520, refer to the descriptions of S220. Details are not described herein again.

It should be understood that in the embodiment shown in FIG. 5, this application supports performing BSR reporting by using an existing BSR table.

An appropriate first coefficient is configured. When a data amount of a service of the terminal device is large, in this application, a first half part with high reporting precision in the existing BSR table may be used to feed back the data amount of the service, so that more accurate BSR reporting can be implemented, thereby avoiding the problem such as the waste or deficiency of allocated communication resources.

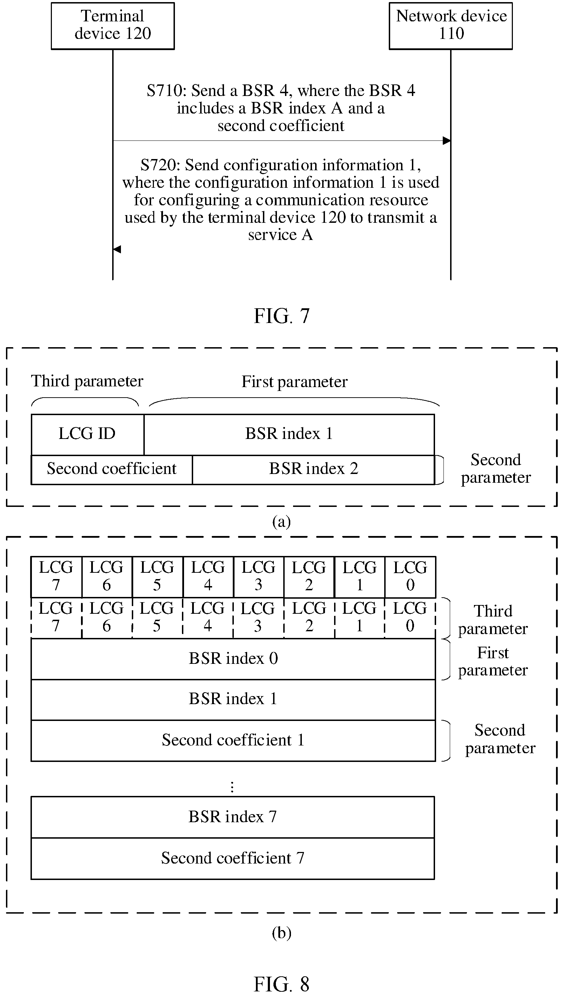

FIG. 7 is a schematic interaction flowchart of a method 700 for reporting a buffer status report according to an embodiment of this application. A method procedure in FIG. 7 may be performed by a terminal device and a network device, or may be performed by modules and/or components (for example, chips or integrated circuits) that are installed in the terminal device and the network device and that have corresponding functions. This is not limited in this embodiment of this application. The following uses the terminal device and the network device as an example for description. As shown in FIG. 7, the method 700 includes the following steps.

S710: The terminal device 120 sends a BSR 4 to the network device 110, where the BSR 4 includes a BSR index A and a second coefficient.

Correspondingly, the network device 110 receives the BSR 4 from the terminal device 120.

For detailed descriptions of S710, refer to the descriptions of S210. Details are not described herein again.

Specifically, the second coefficient is used for a multiplication operation of a buffer status value interval indicated by the BSR index A. For ease of description, Table 1 is used as an example for description in this application.

When the terminal device 120 triggers the BSR, the terminal device 120 first determines whether a data amount of a service A is greater than a threshold (for example, 80 Mbytes). If determining that the data amount of the service A is greater than the threshold, the terminal device 120 reports the BSR 4 to the network device 110.

In a possible implementation, when the terminal device 120 triggers the BSR, the terminal device 120 determines whether the data amount of the service A exceeds a buffer status value interval corresponding to a BSR index N in a BSR table (where the BSR index N is any BSR index, for example, a BSR index = 165, in the BSR table). If the data amount of the service A is not greater than the threshold, an original BSR reporting manner is used for reporting. Otherwise, the terminal device 120 reports the second coefficient (for example, Cmax), the BSR index N (for example, maxBSRindex, which may alternatively not be reported), and the BSR index A (which may be, for example, remainBSRindex) to the network device 110.

remainBSRindex represents a BSR index corresponding to a remaining data amount obtained by subtracting Cmax times the buffer status value interval corresponding to maxBSRindex from the data amount of the service A. The network device 120 uses Cmax*BSvalue (maxBSRindex) + remainBSindex as the data amount of the service A reported by the terminal device 120. In addition, the BSR index N is configured between the terminal device 120 and the network device 110. Therefore, the terminal device 120 does not report the BSR index N to the network device 110, but reports the second coefficient associated with the BSR index N and the BSR index A.

For example, the BSR index N = 100, the data amount of the service A = 60 Kbytes, the second coefficient = 10, and the BSR index A is 139. The network device 110 determines, based on information such as the BSR index N, the second coefficient, and the BSR index A, that the data amount of the service A of the terminal device 120 falls within (56699, 60376]. In comparison with a case in which the data amount of the service A determined by the network device 110 based on the BSR index A = 139 of the terminal device 120 falls within (58784, 62599], in this case, an error of 138 bytes may be reduced, so that the network device can configure an appropriate communication resource for the terminal device, to avoid a problem such as a waste or deficiency of allocated communication resources.

In a possible implementation, the terminal device 120 determines that the data amount of the service A is greater than the buffer status value interval corresponding to the BSR index N in the BSR table (where the BSR index N is any BSR index, for example, the BSR index = 165, in the BSR table). The terminal device 120 reports a plurality of BSR indexes and corresponding second coefficients to the network device 110.

For example, a BSR index A1 = 165, C1 = 4, a BSR index A2 = 117, C2 = 1, and the data amount of the service A of the terminal device 110 is 1.3 Mbytes. The network device 110 determines, based on information reported by the terminal device 120, that the data amount of the service A = the BSR index A1*C1 + the BSR index A2*C2 = (1221052, 1300312]. In comparison with a case in which the data amount of the service A determined by the network device 110 based on an SBR index A = 188 reported by the terminal device 120 falls within (1281179, 1364342], in this case, an error of 3903 bytes may be reduced, so that the network device can configure the appropriate communication resource for the terminal device, to avoid the problem such as the waste or deficiency of allocated communication resources.

It should be understood that the foregoing is merely an example for understanding, and a combination manner of the second coefficient and the BSR index is not limited in this application.

Optionally, the terminal device 120 reports, to the network device 110, statistical information related to a data packet size, for example, information such as an average packet size and a maximum/minimum value.

Optionally, the terminal device 120 reports information such as a data arrival periodicity/frame rate to the network device 110.

It should be understood that the information may be used for assisting the network device 110 in configuring a plurality of candidate second coefficients.

Correspondingly, the network device 110 may deliver the plurality of candidate second coefficients to the terminal device 120. The terminal device 120 selects an appropriate second coefficient from the plurality of candidate second coefficients based on a service transmission requirement of the terminal device 120, and reports the appropriate second coefficient to the network device 110, so that the network device 110 more accurately obtains information about the data amount of the service A of the terminal device 120.

Optionally, the terminal device 120 may also report one or more candidate second coefficients to the network device 110. The network device 110 determines a plurality of appropriate candidate second coefficients from the one or more candidate second coefficients reported by the terminal device 120, and delivers the plurality of appropriate candidate second coefficients to the terminal device 120.

FIG. 8 is a diagram of still another structure of a BSR according to an embodiment of this application. The BSR shown in (a) in FIG. 8 is specific to a short BSR table. Specifically, the BSR 4 includes a first parameter (buffer size), a second parameter (second coefficient), and a third parameter (LCG ID). The first parameter indicates a BSR index A, the second parameter is used for a multiplication operation of a buffer status value interval, and the third parameter indicates the LCG identifier. For example, this application supports using five bits to indicate the first parameter, using three bits to indicate the third parameter, and using one or more bits to indicate the second parameter.

The BSR shown in (b) in FIG. 8 is specific to a long BSR table. Specifically, the BSR 4 includes a plurality of first parameters (buffer sizes), a plurality of second parameters (second coefficients), and a third parameter (LCG ID). The first parameter indicates a BSR index A, the second parameter is used for a multiplication operation of a buffer status value interval, and the third parameter indicates the LCG identifier. For example, this application supports using eight bits to indicate each first parameter, and using eight bits to indicate the third parameter. For example, in this application, that a specific LCG has uplink data that needs to be transmitted or a buffer size that needs to be reported can be indicated in a manner of a bitmap. For example, the bitmap includes eight bits, and each bit indicates whether one LCG has uplink data that needs to be transmitted. For example, when a bit is 1, it indicates that there is data that needs to be transmitted; or when a bit is 0, it indicates that there is no data that needs to be transmitted. In addition, this application supports using one or more bits to indicate each second parameter.

Optionally, this application supports adding a bitmap indicating whether each LCG has a second coefficient in (b) in FIG. 8. In this way, the network device 110 can determine, based on the bitmap, whether the foregoing operation manner needs to be performed to determine the data amount of the service A.

It should be understood that, in (b) in FIG. 8, not all LCGs require configurations of second coefficients. For example, a second coefficient 0 does not need to be configured for an LCG 0, and a BSR index 1 and a second coefficient 1 are configured for an LCG 1.

It should be understood that content shown in FIG. 8 is merely an example for reference, and a specific configuration format or form is not limited in this application.

S720: The network device 110 sends configuration information 1 to the terminal device 120, where the configuration information 1 is used for configuring a communication resource used by the terminal device 120 to transmit the service A.

Correspondingly, the terminal device 120 receives the configuration information 1 from the network device 110.

For detailed descriptions of S720, refer to the descriptions of S220. Details are not described herein again.

It should be understood that in the embodiment shown in FIG. 7, this application supports performing BSR reporting by using an existing BSR table.

An appropriate second coefficient is configured. When a data amount of a service of the terminal device is large, in this application, a first half part with high reporting precision in the existing BSR table may be used to feed back the data amount of the service, so that more accurate BSR reporting can be implemented, thereby avoiding the problem such as the waste or deficiency of allocated communication resources.

Specifically, when the data amount of the service of the terminal device is large, in this application, high-precision BSR reporting can be implemented in the foregoing manner, and a problem that BSR reporting accuracy is reduced because an allocation granularity of a last half part of the BSR table is excessively large can be avoided.

The foregoing describes the method embodiments in embodiments of this application, and the following describes corresponding apparatus embodiments.

To implement functions in the methods provided in embodiments of this application, both the terminal and the network device may include a hardware structure and/or a software module, and implement functions in the form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

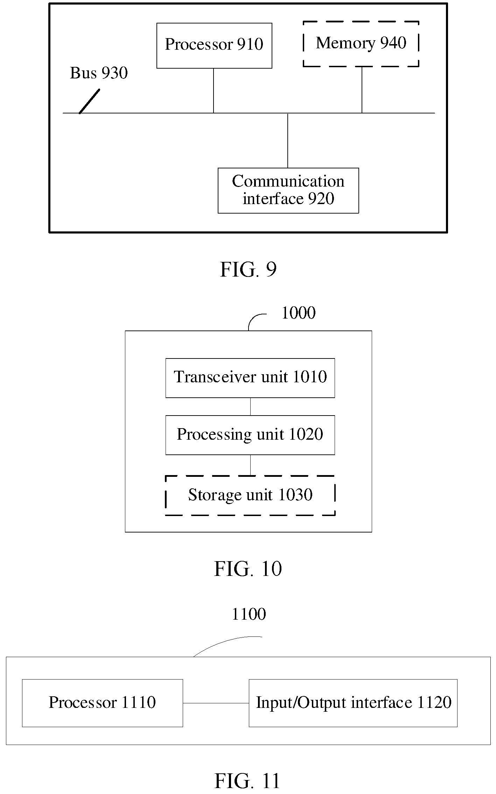

FIG. 9 is a block diagram of a structure of a communication apparatus 900 according to an embodiment of this application. The communication apparatus 900 includes a processor 910 and a communication interface 920. The processor 910 and the communication interface 920 may be connected to each other via a bus 930. The communication apparatus 900 shown in FIG. 9 may be a network device, or may be a terminal device.

Optionally, the communication apparatus 900 further includes a memory 940.

The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data.

The processor 910 may be one or more central processing units (central processing units, CPUs). When the processor 910 is one CPU, the CPU may be a single-core CPU, or may be a multi-core CPU.

When the communication apparatus 900 is a terminal device 120, for example, the processor 910 in the communication apparatus 900 is configured to perform the following operations. The processor 910 sends a BSR 1 to a network device 110, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval; and receives configuration information 1 sent by the network device 110, and transmits the service A based on a communication resource configured by using the configuration information 1.

The foregoing content is merely used as an example for description. When the communication apparatus 900 is the terminal device 120, the communication apparatus 900 is responsible for performing the methods or steps related to the terminal device 120 in the foregoing method embodiments.

When the communication apparatus 900 is a network device 110, for example, the processor 910 in the communication apparatus 900 is configured to perform the following operations. The processor 910 receives a BSR 1 from a terminal device 120, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval; determines configuration information 1 based on the BSR 1; and sends the configuration information 1 to the terminal device 120.

The foregoing content is merely used as an example for description. When the communication apparatus 900 is the network device 110, the communication apparatus 900 is responsible for performing the methods or steps related to the network device 110 in the foregoing method embodiments.

The foregoing description is merely an example description. For specific content, refer to the content shown in the foregoing method embodiments. In addition, for implementation of each operation in FIG. 9, refer to corresponding descriptions in the method embodiments shown in FIG. 2 to FIG. 8.

FIG. 10 is a block diagram of a structure of a communication apparatus 1000 according to an embodiment of this application. The communication apparatus 1000 may be the network device or the terminal device in the foregoing embodiments, or may be a chip or a module in the network device or the terminal device, and is configured to implement the method in the foregoing embodiments. The communication apparatus 1000 includes a transceiver unit 1010 and a processing unit 1020. The following describes the transceiver unit 1010 and the processing unit 1020 by using examples.

The transceiver unit 1010 may include a sending unit and a receiving unit that are respectively configured to implement a sending function or a receiving function in the foregoing method embodiments. The transceiver unit 1010 may further include a processing unit, configured to implement a function other than sending or receiving.

When the communication apparatus 1000 is a terminal device 120, for example, the transceiver unit 1010 is configured to send a BSR 1 to a network device 110, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval. The transceiver unit 1010 is further configured to receive configuration information 1 sent by the network device 110, and transmit the service A based on a communication resource configured by using the configuration information 1.

The processing unit 1020 of the communication apparatus 1000 is configured to perform content related to steps such as processing and coordination of the terminal device 120. For example, the processing unit 1020 is configured to determine whether the data amount of the service A is greater than 150 Kbytes.

Optionally, the communication apparatus 1000 further includes a storage unit 1030. The storage unit 1030 is configured to store a program or code used for performing the foregoing method.

The foregoing content is merely used as an example for description. When the communication apparatus 1000 is the terminal device 120, the communication apparatus 1000 is responsible for performing the methods or steps related to the terminal device 120 in the foregoing method embodiments.

When the communication apparatus 1000 is a network device 110, for example, the transceiver unit 1010 is configured to receive a BSR 1 from a terminal device 120, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval. The transceiver unit 1010 is further configured to send configuration information 1 to the terminal device 120. The processing unit 1020 is configured to determine the configuration information 1 based on the BSR 1.

The processing unit 1020 of the communication apparatus 1000 is configured to perform content related to steps such as processing and coordination of the network device 110.

Optionally, the communication apparatus 1000 further includes a storage unit 1030. The storage unit 1030 is configured to store a program or code used for performing the foregoing method.

The foregoing content is merely used as an example for description. When the communication apparatus 1000 is the network device 110, the communication apparatus 1000 is responsible for performing the methods or steps related to the network device 110 in the foregoing method embodiments.

In addition, for implementation of each operation in FIG. 10, refer to corresponding descriptions of the method shown in the foregoing embodiments. Details are not described herein again.

The apparatus embodiments shown in FIG. 9 and FIG. 10 are used for implementing the content described in the method embodiments shown in FIG. 2 to FIG. 8. Therefore, for specific execution steps and methods of the apparatuses shown in FIG. 9 and FIG. 10, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below.

FIG. 11 is a diagram of a communication apparatus 1100 according to an embodiment of this application. The communication apparatus 1100 may be configured to implement functions of the network device and the terminal device in the foregoing method. The communication apparatus 1100 may be a chip in the network device or a chip in the terminal device.

The communication apparatus 1100 includes an input/output interface 1120 and a processor 1110. The input/output interface 1120 may be an input/output circuit. The processor 1110 may be a signal processor, a chip, or another integrated circuit that can implement the method in this application. The input/output interface 1120 is configured to input or output a signal or data.

For example, when the communication apparatus 1100 is a terminal device 120, the input/output interface 1120 is configured to send a BSR 1 to a network device 110, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval. The processor 1110 is configured to perform some or all steps of any method provided in embodiments of this application.

For example, when the communication apparatus 1100 is a network device 110, the input/output interface 1120 is configured to receive a BSR 1 from a terminal device 120, where the BSR 1 includes a first parameter and a second parameter, the first parameter indicates a BSR index A, the second parameter is an associated parameter of the BSR index A, the first parameter and the second parameter indicate a data amount of a service A of a first communication apparatus, and the BSR index A indicates a buffer status value interval. The processor 1110 is configured to perform some or all steps of any method provided in embodiments of this application.

In a possible implementation, the processor 1110 executes instructions stored in a memory, to implement a function implemented by the network device or the terminal device.

Optionally, the communication apparatus 1100 further includes a memory.

Optionally, the processor and the memory are integrated together.

Optionally, the memory is outside the communication apparatus 1100.

In a possible implementation, the processor 1110 may be a logic circuit, and the processor 1110 inputs/outputs a message or signaling through the input/output interface 1120. The logic circuit may be a signal processor, a chip, or another integrated circuit that can implement the method in embodiments of this application.

The foregoing description of the apparatus in FIG. 11 is merely an example for description. The apparatus can be configured to perform the methods in the foregoing embodiments. For specific content, refer to the descriptions in the foregoing method embodiment. Details are not described herein again.

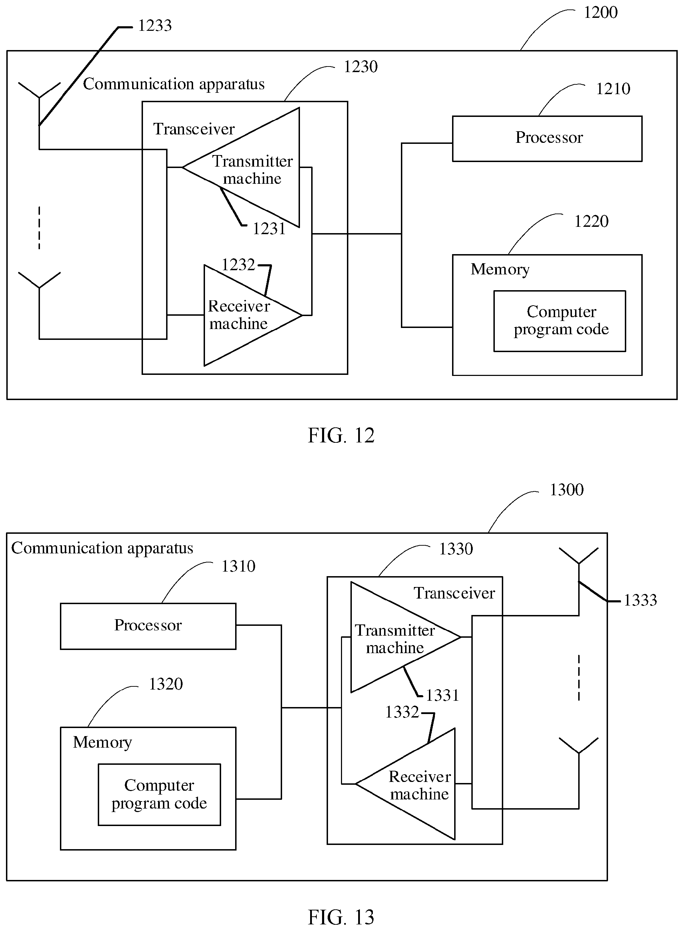

FIG. 12 is a block diagram of a communication apparatus 1200 according to an embodiment of this application. The communication apparatus 1200 may be a network device or a chip. The communication apparatus 1200 may be configured to perform operations performed by the network device in the method embodiments shown in FIG. 2 to FIG. 8.

The communication apparatus 1200 is a network device, for example, a base station. FIG. 12 is a simplified diagram of a structure of a base station. The base station includes a part 1210, a part 1220, and a part 1230. The part 1210 is mainly configured to perform baseband processing, control the base station, and the like. The part 1210 is usually a control center of the base station, may be usually referred to as a processor, and is configured to control the base station to perform a processing operation on a network device side in the foregoing method embodiments. The part 1220 is mainly configured to store computer program code and data. The part 1230 is mainly configured to receive and send a radio frequency signal, and perform conversion between the radio frequency signal and a baseband signal. The part 1230 may be usually referred to as a transceiver module, a transceiver machine, a transceiver circuit, a transceiver, or the like. The transceiver module in the part 1230 may also be referred to as a transceiver machine, a transceiver, or the like, and includes an antenna 1233 and a radio frequency circuit (not shown in the figure). The radio frequency circuit is mainly configured to perform radio frequency processing. Optionally, a component configured to implement a receiving function in the part 1230 may be considered as a receiver machine, and a component configured to implement a sending function may be considered as a transmitter machine. In other words, the part 1230 includes the receiver machine 1232 and the transmitter machine 1231. The receiver machine may also be referred to as a receiving module, a receiver, a receiver circuit, or the like, and the transmitter machine may be referred to as a transmitting module, a transmitter, a transmitter circuit, or the like.

The part 1210 and the part 1220 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module in the part 1230 is configured to perform a receiving and sending-related process performed by the network device in the embodiments shown in FIG. 2 to FIG. 8. The processor in the part 1210 is configured to perform a processing-related process performed by the network device in the embodiments shown in FIG. 2 to FIG. 8.

In another implementation, the processor in the part 1210 is configured to perform a processing-related process performed by a communication device in the embodiments shown in FIG. 2 to FIG. 8.

In another implementation, the transceiver module in the part 1230 is configured to perform a receiving and sending-related process performed by a communication device in the embodiments shown in FIG. 2 to FIG. 8.

It should be understood that FIG. 12 is merely an example rather than a limitation. The network device including the processor, the memory, and the transceiver may not depend on structures shown in FIG. 9 to FIG. 11.

When the communication apparatus 1200 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

FIG. 13 is a block diagram of a communication apparatus 1300 according to an embodiment of this application. The communication apparatus 1300 may be a terminal device, a processor of the terminal device, or a chip. The communication apparatus 1300 may be configured to perform an operation performed by the terminal device or the communication device in the foregoing method embodiments.

When the communication apparatus 1300 is the terminal device, FIG. 13 is a simplified diagram of a structure of the terminal device. As shown in FIG. 13, the terminal device includes a processor, a memory, and a transceiver. The memory may store computer program code. The transceiver includes a transmitter machine 1331, a receiver machine 1332, a radio frequency circuit (not shown in the figure), an antenna 1333, and an input/output apparatus (not shown in the figure).

The processor is mainly configured to process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in the form of an electromagnetic wave. The input/output apparatus, for example, a touchscreen, a display screen, or a keyboard, is mainly configured to receive data inputted by a user and outputted data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in the form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like, and the transceiver 1330 may also be referred to as a transceiver unit, a transceiver machine, a transceiver apparatus, or the like.

Optionally, a component configured to implement a receiving function in the transceiver 1330 may be considered as a receiving module, and a component configured to implement a sending function in the transceiver 1330 may be considered as a sending module. In other words, the transceiver 1330 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1310 is configured to perform a processing action on a terminal device side in the embodiments shown in FIG. 2 to FIG. 8, and the transceiver 1330 is configured to perform a transceiver action on the terminal device side in FIG. 2 to FIG. 8.

For example, in an implementation, the processor 1310 is configured to perform a processing action on a terminal device side in the embodiments shown in FIG. 2 to FIG. 8, and the transceiver 1330 is configured to perform a transceiver action on the terminal device side in FIG. 2 to FIG. 8.

It should be understood that FIG. 13 is merely an example rather than a limitation. The terminal device including the transceiver module and the processing module may not depend on structures shown in FIG. 9 to FIG. 11.

When the communication apparatus 1300 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor. The processor is configured to invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes a memory, and the memory is configured to store a computer program or code.

This application further provides a processor, configured to be coupled to a memory, and configured to perform the method and the function that are relates to the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In descriptions in embodiments of this application, unless otherwise specified, "a plurality of" means two or more. "At least one of the following items (pieces)" or a similar expression means any combination of these items (pieces), including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the terms such as "example" or "for example" are used to represent giving an example, an illustration, or a description.

Any embodiment or design solution described by using "example" or "for example" in embodiments of this application should not be explained as being more preferred or having more advantages than another embodiment or design solution. Exactly, use of the term such as "example" or "for example" is intended to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In various embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in various embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope in embodiments of this application should be subject to the protection scope of the claims.

## Claims

1. A method for reporting a buffer status report, comprising:
sending, by a first communication apparatus, a buffer status report BSR to a second communication apparatus, wherein the BSR comprises a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval; and
receiving, by the first communication apparatus, configuration information from the second communication apparatus, wherein the configuration information is used for configuring a communication resource used by the first communication apparatus to transmit the service.

2. The method according to claim 1, wherein the second parameter comprises at least one of the following:
an interval index, an operation coefficient, or an indication parameter, wherein
the interval index indicates a subinterval in the buffer status value interval;
the operation coefficient is used for an operation on the buffer status value interval; and
the indication parameter indicates whether the operation coefficient needs to be used.

3. The method according to claim 2, wherein the operation coefficient comprises at least one of the following:
a first coefficient or a second coefficient, wherein
the first coefficient is used for an addition operation on the buffer status value interval; and
the second coefficient is used for a multiplication operation on the buffer status value interval.

4. The method according to claim 2 or 3, wherein when the second parameter comprises the interval index, before the sending, by a first communication apparatus, a BSR to a second communication apparatus, the method further comprises:
determining, by the first communication apparatus, that the data amount of the service falls within the subinterval.

5. The method according to any one of claims 1 to 4, wherein when the service is an extended reality service, the buffer status value interval is a parameter in a long BSR table.

6. A method for reporting a buffer status report, comprising:
receiving, by a second communication apparatus, a buffer status report BSR from a first communication apparatus, wherein the BSR comprises a first parameter and a second parameter, the first parameter indicates a BSR index, the second parameter is an associated parameter of the BSR index, the first parameter and the second parameter indicate a data amount of a service of the first communication apparatus, and the BSR index indicates a buffer status value interval;
determining, by the second communication apparatus, configuration information based on the BSR, wherein the configuration information is used for configuring a communication resource used by the first communication apparatus to transmit the service; and
sending, by the second communication apparatus, the configuration information to the first communication apparatus.

7. The method according to claim 6, wherein the second parameter comprises at least one of the following:
an interval index, an operation coefficient, or an indication parameter, wherein
the interval index indicates a subinterval in the buffer status value interval;
the operation coefficient is used for an operation on the buffer status value interval; and
the indication parameter indicates whether the operation coefficient needs to be used.

8. The method according to claim 7, wherein the operation coefficient comprises at least one of the following:
a first coefficient or a second coefficient, wherein
the first coefficient is used for an addition operation on the buffer status value interval; and
the second coefficient is used for a multiplication operation on the buffer status value interval.

9. The method according to any one of claims 6 to 8, wherein the determining, by the second communication apparatus, configuration information based on the BSR comprises:
determining, by the second communication apparatus, the data amount of the service based on the first parameter and the second parameter; and
determining, by the second communication apparatus, the configuration information based on the data amount of the service.

10. The method according to any one of claims 6 to 8, wherein when the service is an extended reality service, the buffer status value interval is a parameter in a long BSR table.

11. A communication apparatus, comprising:
a transceiver unit, configured to send a buffer status report BSR to a second communication apparatus, wherein the BSR comprises a first parameter and a second parameter, the first parameter indicates a BSR index, the second parameter is an associated parameter of the BSR index, the first parameter and the second parameter indicate a data amount of a service of the communication apparatus, and the BSR index indicates a buffer status value interval, wherein
the transceiver unit is further configured to receive configuration information from the second communication apparatus, wherein the configuration information is used for configuring a communication resource used by the communication apparatus to transmit the service.

12. The apparatus according to claim 11, wherein the second parameter comprises at least one of the following:
an interval index, an operation coefficient, or an indication parameter, wherein
the interval index indicates a subinterval in the buffer status value interval;
the operation coefficient is used for an operation on the buffer status value interval; and
the indication parameter indicates whether the operation coefficient needs to be used.

13. The apparatus according to claim 12, wherein the operation coefficient comprises at least one of the following:
a first coefficient or a second coefficient, wherein
the first coefficient is used for an addition operation on the buffer status value interval; and
the second coefficient is used for a multiplication operation on the buffer status value interval.

14. The apparatus according to claim 12 or 13, wherein the communication apparatus further comprises a processing unit, and
the processing unit is configured to determine that the data amount of the service falls within the subinterval.

15. The apparatus according to any one of claims 11 to 14, wherein when the service is an extended reality service, the buffer status value interval is a parameter in a long BSR table.

16. A communication apparatus, comprising:
a transceiver unit, configured to receive a buffer status report BSR from a first communication apparatus, wherein the BSR comprises a first parameter and a second parameter, the first parameter indicates a BSR index, the second parameter is an associated parameter of the BSR index, the second parameter and the first parameter indicate a data amount of a service of the first communication apparatus, and the BSR index indicates a buffer status value interval; and
a processing unit, configured to determine configuration information based on the BSR, wherein the configuration information is used for configuring a communication resource used by the first communication apparatus to transmit the service, wherein
the transceiver unit is further configured to send the configuration information to the first communication apparatus.

17. The apparatus according to claim 16, wherein the second parameter comprises at least one of the following:
an interval index, an operation coefficient, or an indication parameter, wherein
the interval index indicates a subinterval in the buffer status value interval;
the operation coefficient is used for an operation on the buffer status value interval; and
the indication parameter indicates whether the operation coefficient needs to be used.

18. The apparatus according to claim 17, wherein the operation coefficient comprises at least one of the following:
a first coefficient or a second coefficient, wherein
the first coefficient is used for an addition operation on the buffer status value interval; and
the second coefficient is used for a multiplication operation on the buffer status value interval.

19. The apparatus according to any one of claims 16 to 18, wherein the processing unit is configured to:
determine the data amount of the service based on the first parameter and the second parameter; and
determine the configuration information based on the data amount of the service.

20. The apparatus according to any one of claims 16 to 18, wherein when the service is an extended reality service, the buffer status value interval is a parameter in a long BSR table.

21. A communication apparatus, comprising a processor, wherein the processor is configured to enable, by executing a computer program or instructions or by using a logic circuit, the communication apparatus to perform the method according to any one of claims 1 to 10.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein the input/output interface is configured to input and/or output a signal, and the logic circuit is configured to perform the method according to any one of claims 1 to 10.

25. A computer-readable storage medium, comprising a computer program or instructions, wherein when the computer program or the instructions are run on a computer, the method according to any one of claims 1 to 10 is performed.

26. A computer program product, comprising instructions, wherein when the instructions are run on a computer, the method according to any one of claims 1 to 10 is performed.

27. A computer program, wherein when the computer program is run on a computer, the method according to any one of claims 1 to 10 is performed.

28. A communication apparatus, wherein the communication apparatus is configured to perform the method according to any one of claims 1 to 5.

29. A communication apparatus, wherein the communication apparatus is configured to perform the method according to any one of claims 6 to 10.

30. A communication system, comprising a first communication apparatus and a second communication apparatus, wherein the first communication apparatus is configured to perform the method according to any one of claims 1 to 5, and the second communication apparatus is configured to perform the method according to any one of claims 6 to 10.
